(19) **Europäisches Patentamt / European Patent Office / Office européen des brevets**

(11) **EP 3 958 620 A1**

(12) **EUROPEAN PATENT APPLICATION**
published in accordance with Art. 153(4) EPC

(43) Date of publication:
**23.02.2022 Bulletin 2022/08**

(21) Application number: **20798161.4**

(22) Date of filing: **26.04.2020**

(51) International Patent Classification (IPC):
**H04W 52/02** *(2009.01)*

(52) Cooperative Patent Classification (CPC):
**H04L 5/00; H04W 52/02; Y02D 30/70**

(86) International application number:
**PCT/CN2020/087063**

(87) International publication number:
**WO 2020/221176 (05.11.2020 Gazette 2020/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2019 CN 201910365298**

(71) Applicant: **Huawei Technologies Co., Ltd.**
**Shenzhen, Guangdong 518129 (CN)**

(72) Inventors:
• **LIU, Jianqin**
  **Shenzhen, Guangdong 518129 (CN)**
• **ZHANG, Zhanzhan**
  **Shenzhen, Guangdong 518129 (CN)**
• **GAO, Kuandong**
  **Shenzhen, Guangdong 518129 (CN)**
• **TIE, Xiaolei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR SENDING AND RECEIVING REFERENCE SIGNAL SET**

(57)     Disclosed are a method and an apparatus for sending and receiving a reference signal set. The method includes: sending, by a network device, configuration information for a reference signal set; and sending, by the network device, the reference signal set based on the configuration information, where the reference signal set is associated with a PF, and in time domain, the reference signal set is after a synchronization signal burst set and before a first PO in the PF. Therefore, when a time gap between the synchronization signal burst set and a PO for a terminal device is relatively long, the terminal device may perform AGC tuning, time/frequency tracking, beam selection, and RRM measurement based on the reference signal set, to reduce wake-up times of the terminal device or reduce a wake-up duration of the terminal device, thereby reducing power consumption of the terminal device.

FIG. 4

## Description

## CROSS-REFERENCE TO RELATED APPLICATIONS

This application claims priority to Chinese Patent Application No. 201910365298.9, filed with the China National Intellectual Property Administration on April 30, 2019, and entitled "METHOD AND APPARATUS FOR SENDING AND RECEIVING REFERENCE SIGNAL SET", which is incorporated herein by reference in its entirety.

## TECHNICAL FIELD

This application relates to the field of communications technologies, and in particular, to a method and an apparatus for sending and receiving a reference signal set.

## BACKGROUND

User equipment (user equipment, UE) in a radio resource control (radio resource control, RRC) idle state (RRC_IDLE) or an RRC inactive state (RRC_INACTIVE) mainly performs two things: paging (Paging) message monitoring and radio resource management (radio resource management, RRM) measurement. A network device configures a paging discontinuous reception (discontinuous reception, DRX) cycle for the UE. The UE needs to monitor a paging message only on one paging occasion (paging occasion, PO) in a paging DRX cycle (paging DRX cycle), and may enter a sleeping state at other times, without monitoring a paging message.

To monitor a paging message, the UE needs to wake up before a PO and perform automatic gain control (automatic gain control, AGC) tuning (AGC tuning), time/frequency tracking (t/f tracking), and beam selection based on a synchronization signal or physical broadcast channel block (synchronization signal/physical broadcast channel block, SSB) in a synchronization signal burst set (SS burst set). In addition, the UE performs RRM measurement also based on the SSB in the synchronization signal burst set. Therefore, power consumption of the UE in the RRC_IDLE state or the RRC_INACTIVE state mainly includes the following:

    (a) AGC tuning and time/frequency tracking;
    (b) monitoring a plurality of beams for beam selection;
    (c) monitoring a paging message; and
    (d) RRM measurement.

Further, a PO for the UE is related to a UE ID, and the SSB is a cell-specific broadcast signal with a relatively sparse periodicity. Therefore, it is possible that a time gap between the synchronization signal burst set and the PO for the UE is relatively long, causing the UE to wake up twice in the synchronization signal burst set and the PO for the UE (or maintain a long wake-up duration between the SSB and the PO), and resulting in high power consumption of the UE. For example, to perform beam selection based on the SSB in the synchronization signal burst set, the UE needs to wake up in the synchronization signal burst set, or to perform RRM measurement based on the SSB in the synchronization signal burst set, the UE needs to wake up in the synchronization signal burst set.

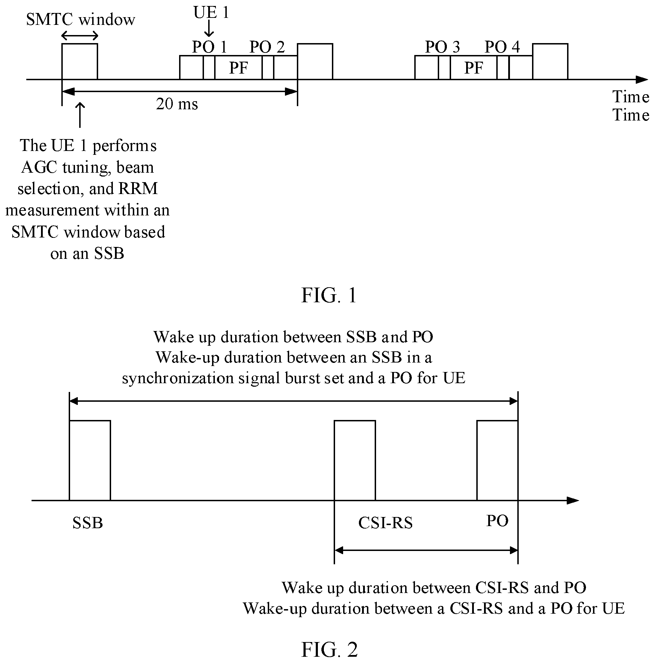

As shown in FIG. 1, a network device configures SSB measurement time configuration (SS/PBCH Block Measurement Time Configuration, SMTC) for UE 1, and the UE 1 performs RRM measurement within an SMTC window duration (SMTC window duration). In FIG. 1, a periodicity of a synchronization signal burst set is 20 ms, and a periodicity of the SMTC is also 20 ms. One of every two frames is a PF, the synchronization signal burst set and the PF are not aligned, and a PO for the UE 1 is a PO 1. To monitor a paging message on the PO 1, the UE 1 needs to wake up in advance within the SMTC window, and performs AGC tuning, beam selection, and RRM measurement based on an SSB in the synchronization signal burst set, and the UE 1 is woken up again on the PO 1. In other words, the UE wakes up twice, and therefore power consumption of the UE is relatively high.

In addition, one PO consists of a plurality of physical downlink control channel (physical downlink control channel, PDCCH) monitoring occasions (PDCCH monitoring occasions), and the UE monitors the paging message based on a PDCCH monitoring occasion corresponding to a selected beam. However, when the time gap between the synchronization signal burst set and the PO for the UE is relatively long, the beam selected by the UE may change greatly due to user movement or device rotation/flipping. As a result, the UE still needs to scan and monitor the paging message on a plurality of PDCCH monitoring occasions, causing relatively high power consumption of the UE.

At present, some solutions propose that other reference signals may be used for RRM measurement, such as a channel state information reference signal (channel state information reference signal, CSI-RS). The CSI-RS has relatively high frequency domain bandwidth, providing higher measurement accuracy than the SSB. Therefore, a quantity of RRM measurements can be reduced, and power consumption of the UE can be reduced. In addition, the CSI-RS is also a periodic signal. If the CSI-RS is closer to the PO for the UE than the synchronization signal burst set, the UE selects the CSI-RS to perform RRM measurement, to reduce a wake-up duration of the UE, and also reduce power consumption of the UE, as shown in FIG. 2. However, a CSI-RS configured for UE in a connected state is not necessarily closer to a PO for the UE than a synchronization signal burst set. Therefore, power consumption of the UE may not be effectively reduced. Moreover, in some scenarios, when the UE performs RRM measurement based on the CSI-RS signal configured for the UE in the connected state, measurement accuracy is reduced instead.

## SUMMARY

Embodiments of this application provide a method and an apparatus for sending a reference signal set, to reduce power consumption of a terminal device.

According to a first aspect, an embodiment of this application provides a method for sending a reference signal set, including: sending, by a network device, configuration information for a reference signal set; and sending the reference signal set based on the configuration information, where the reference signal set is associated with a paging frame PF, and in time domain, the reference signal set is after a synchronization signal burst set and before a first paging occasion PO in the PF.

According to the foregoing method, when a time gap between the synchronization signal burst set and a PO for a terminal device is relatively long, the terminal device may perform AGC tuning, time/frequency tracking, beam selection, and RRM measurement based on the reference signal set, to reduce wake-up times of the terminal device or reduce a wake-up duration of the terminal device, thereby reducing power consumption of the terminal device.

In a possible design, the reference signal set includes M reference signals, the M reference signals are sent in a beam-sweeping form, and each reference signal corresponds to one beam direction, where M is a positive integer.

By using the foregoing design, the terminal device may perform beam selection based on the reference signal set, and monitor a paging message based on a PDCCH monitoring occasion corresponding to a selected beam, thereby reducing power consumption of the terminal device.

In a possible design, the M reference signals are M SSSs, M CSI-RSs, or M new sequence-based reference signals.

By using the foregoing design, existing reference signals or newly designed reference signals may be used for the M reference signals.

In a possible design, the M reference signals are distributed on M consecutive symbols; or the M reference signals are distributed on M nonconsecutive symbols, and the configuration information indicates a sending pattern of the M reference signals.

By using the foregoing design, the M reference signals may be flexibly distributed on time domain symbols.

In a possible design, if a quantity M of beams corresponding to the reference signal set is equal to a quantity N of beams corresponding to the synchronization signal burst set, a $k^{th}$ reference signal in the reference signal set corresponds to a $k^{th}$ physical downlink control channel PDCCH monitoring occasion in each PO in the PF, where both N and k are positive integers, and $k \leq M$;

if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, where both N and k are positive integers, and k $\leq M$; if a quantity M of beams corresponding to the reference signal set is less than a quantity N of beams corresponding to the synchronization signal burst set, and N is not an integer multiple of M, assuming that

$$x = N - M \left\lfloor \frac{N}{M} \right\rfloor$$

, an $i^{th}$ reference signal in first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{lh}$ reference signal in last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j\lfloor N/M \rfloor]^{th}$ PDCCH monitoring occasions in each PO in the PF, where N, x, i, and j are all positive integers, $i \leq x$, and $j \leq M - x$; or if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

By using the foregoing design, based on different relationships between the quantity M of beams corresponding to the reference signal set and the quantity N of beams corresponding to the synchronization signal burst set, a correspondence between the reference signal in the reference signal set and the PDCCH monitoring occasion in each PO in the PF is different. The terminal device may perform beam selection based on the reference signal set, and monitor the paging message based on the PDCCH monitoring occasion corresponding to the selected beam, thereby reducing power consumption of the terminal device.

In a possible design, the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of a first PDCCH monitoring occasion in the first PO or a starting symbol of a slot in which the first PDCCH monitoring occasion in the first PO is located.

By using the foregoing design, the configuration information may indicate a time domain position of the reference signal in a plurality of different manners.

In a possible design, the network device sends a system message, where the system message carries the configuration information; or the network device sends radio resource control RRC signaling, where the RRC signaling carries the configuration information.

By using the foregoing design, the network device may carry the configuration information in a plurality of manners.

In a possible design, after the network device sends the configuration information for the reference signal set, the network device sends paging downlink control information, where the paging downlink control information carries configuration change information for the reference signal set, or the paging downlink control information indicates whether the reference signal set is available, or the paging downlink control information indicates an available time range of the reference signal set.

By using the foregoing design, the network device may change the configuration information by using the paging downlink control information, or further dynamically indicate a sending status of the reference signal set quickly.

In a possible design, before the network device sends the configuration information for the reference signal set, the network device receives non-access stratum NAS signaling sent by a terminal device entering an idle-state registration phase, where the NAS signaling is used to request the network device to configure the reference signal set for the terminal device; or the network device receives uplink signaling sent by a terminal device in a connected state, where the uplink signaling is used to request the network device to configure the reference signal set for the terminal device.

By using the foregoing design, the terminal device may request the reference signal set in a plurality of manners.

According to a second aspect, an embodiment of this application provides a method for receiving a reference signal set, including: receiving, by a terminal device configuration information for a reference signal set from a network device; and receiving, by the terminal device, the reference signal set from the network device based on the configuration information, where the reference signal set is associated with a PF, and in time domain, the reference signal set is after a synchronization signal burst set and before a first PO in the PF.

According to the foregoing method, when a time gap between the synchronization signal burst set and a PO for a terminal device is relatively long, the terminal device may perform AGC tuning, time/frequency tracking, beam selection, and RRM measurement based on the reference signal set, to reduce wake-up times of the terminal device or reduce a wake-up duration of the terminal device, thereby reducing power consumption of the terminal device.

In a possible design, the reference signal set includes M reference signals, the M reference signals are sent in a beam-sweeping form, and each reference signal corresponds to one beam direction, where M is a positive integer.

By using the foregoing design, the terminal device may perform beam selection based on the reference signal set, and monitor a paging message based on a PDCCH monitoring occasion corresponding to a selected beam, thereby reducing power consumption of the terminal device.

In a possible design, the M reference signals are M SSSs, M CSI-RSs, or M new sequence-based reference signals.

By using the foregoing design, existing reference signals or newly designed reference signals may be used for the M reference signals.

In a possible design, the M reference signals are distributed on M consecutive symbols; or the M reference signals are distributed on M nonconsecutive symbols, and the configuration information indicates a sending pattern of the M reference signals.

By using the foregoing design, the M reference signals may be flexibly distributed on time domain symbols.

In a possible design, if a quantity M of beams corresponding to the reference signal set is equal to a quantity N of beams corresponding to the synchronization signal burst set, a $k^{th}$ reference signal in the reference signal set corresponds to a $k^{th}$ physical downlink control channel PDCCH monitoring occasion in each PO in the PF, where both N and k are positive integers, and $k \leq M$; if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, where both N and k are positive integers, and $k \leq M$; if a quantity M of beams corresponding to the reference signal set is less than a quantity N of beams corresponding to the synchronization signal burst set, and N is not an integer multiple of M, assuming that

$$x = N - M \left\lfloor \frac{N}{M} \right\rfloor$$

, an $i^{th}$ reference signal in first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{lh}$ reference signal in last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j\lfloor N/M \rfloor]^{th}$ PDCCH monitoring occasions in each PO in the PF, where N, x, i, and j are all positive integers, $i \leq x$, and $j \leq M - x$; or if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

By using the foregoing design, based on different relationships between the quantity M of beams corresponding to the reference signal set and the quantity N of beams corresponding to the synchronization signal burst set, a correspondence between the reference signal in the reference signal set and the PDCCH monitoring occasion in each PO in the PF is different. The terminal device may perform beam selection based on the reference signal set, and monitor the paging message based on the PDCCH monitoring occasion corresponding to the selected beam, thereby reducing power consumption of the terminal device.

In a possible design, the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of a first PDCCH monitoring occasion in the first PO or a starting symbol of a slot in which the first PDCCH monitoring occasion in the first PO is located.

By using the foregoing design, the configuration information may indicate a time domain position of the reference signal in a plurality of different manners.

In a possible design, the terminal device receives a system message from the network device, where the system message carries the configuration information; or the terminal device receives RRC signaling from the network device, where the RRC signaling carries the configuration information.

By using the foregoing design, the network device may carry the configuration information in a plurality of manners.

In a possible design, after the terminal device receives the configuration information for the reference signal set from the network device, the terminal device receives paging downlink control information from the network device, where the paging downlink control information carries configuration change information for the reference signal set, or the paging downlink control information indicates whether the reference signal set is available, or the paging downlink control information indicates an available time range of the reference signal set.

By using the foregoing design, the network device may change the configuration information by using the paging downlink control information, or further dynamically indicate a sending status of the reference signal set quickly.

In a possible design, before the terminal device receives the configuration information for the reference signal set from the network device, the terminal device sends non-access stratum NAS signaling to the network device, where the terminal device is in an idle-state registration phase, and the NAS signaling is used to request the network device to configure the reference signal set for the terminal device; or the terminal device sends uplink signaling to the network device, where the terminal device is in a connected state, and the uplink signaling is used to request the network device to configure the reference signal set for the terminal device.

By using the foregoing design, the terminal device may request the reference signal set in a plurality of manners.

According to a third aspect, an embodiment of this application provides a method for sending a reference signal set, including: sending, by a network device, configuration information for an $i^{th}$ reference signal set in K reference signal sets; and sending the $i^{th}$ reference signal set based on the configuration information, where the $i^{th}$ reference signal set is associated with an $i^{th}$ PO in a PF, and the PF includes K POs; and in time domain, the $i^{th}$ reference signal set is after a synchronization signal burst set and before the $i^{th}$ PO, where both K and i are positive integers, and $i \leq K$.

According to the foregoing method, when a time gap between the synchronization signal burst set and a PO for a terminal device is relatively long, the terminal device may perform AGC tuning, time/frequency tracking, beam selection, and RRM measurement based on the reference signal set, to reduce wake-up times of the terminal device or reduce a wake-up duration of the terminal device, thereby reducing power consumption of the terminal device.

In a possible design, if i = 1, the $i^{th}$ reference signal set is after the synchronization signal burst set and before a first PO in the PF, and if $2 \leq i \leq K$, the $i^{th}$ reference signal set is after an $(i-1)^{th}$ PO and before the $i^{th}$ PO.

By using the foregoing design, it can be ensured that a wake-up duration of the terminal device is relatively short, thereby effectively reducing power consumption of the terminal device.

In a possible design, the $i^{th}$ reference signal set includes M reference signals, the M reference signals are sent in a beam-sweeping form, and each reference signal corresponds to one beam direction, where M is a positive integer.

By using the foregoing design, the terminal device may perform beam selection based on the reference signal set, and monitor a paging message based on a PDCCH monitoring occasion corresponding to a selected beam, thereby reducing power consumption of the terminal device.

In a possible design, the M reference signals are M SSSs, M CSI-RSs, or M new sequence-based reference signals.

By using the foregoing design, existing reference signals or newly designed reference signals may be used for the M reference signals.

In a possible design, the M reference signals are distributed on M consecutive symbols; or the M reference signals are distributed on M nonconsecutive symbols, and the configuration information indicates a sending pattern of the M reference signals.

By using the foregoing design, the M reference signals may be flexibly distributed on time domain symbols.

In a possible design, if a quantity M of beams corresponding to the ith reference signal set is equal to a quantity N of beams corresponding to the synchronization signal burst set, a kth reference signal in the ith reference signal set corresponds to a kth physical downlink control channel PDCCH monitoring occasion in the ith PO, where both N and k are positive integers, and k ≤ M; if a quantity M of beams corresponding to the ith reference signal set is less than a quantity N of beams corresponding to the synchronization signal burst set, and N is an integer multiple of M, a kth reference signal in the ith reference signal set corresponds to [(k - 1)*N/M + 1][th] to (k*N/M)th PDCCH monitoring occasions in the ith PO, where both N and k are positive integers, and k ≤ M; if a quantity M of beams corresponding to the ith reference signal set is less than a quantity N of beams corresponding to the synchronization signal burst set, and N is not an integer multiple of M, assuming that

$$x = N - M \left\lfloor \frac{N}{M} \right\rfloor$$

, an mth reference signal in first x reference signals in the ith reference signal set corresponds to [(m - 1)(⌊N/M⌋ + 1) + 1][th] to [m(⌊N/M⌋ + 1)][th] PDCCH monitoring occasions in the ith PO, and a jth reference signal in last M - x reference signals in the ith reference signal set corresponds to [x(⌊N/M⌋ + 1) + (j - 1)⌊N/M⌋ + 1][th] to [x(⌊N/M⌋ + 1) + j⌊N/M⌋][th] PDCCH monitoring occasions in the ith PO, where N, x, m, and j are all positive integers, m ≤ x, and j ≤ M - x; or if a quantity M of beams corresponding to the ith reference signal set is less than a quantity N of beams corresponding to the synchronization signal burst set, the configuration information indicates at least one PDCCH monitoring occasion in the ith PO corresponding to each of the M reference signals.

By using the foregoing design, based on different relationships between the quantity M of beams corresponding to the reference signal set and the quantity N of beams corresponding to the synchronization signal burst set, a correspondence between the reference signal in the reference signal set and the PDCCH monitoring occasion in each PO in the PF is different. The terminal device may perform beam selection based on the reference signal set, and monitor the paging message based on the PDCCH monitoring occasion corresponding to the selected beam, thereby reducing power consumption of the terminal device.

In a possible design, the configuration information indicates a periodicity and an offset of the ith reference signal set; or the configuration information indicates an offset value between the ith reference signal set and the ith PO, the offset value starts at either a starting symbol of the ith reference signal set or an ending symbol of the ith reference signal set, and the offset value ends at either a starting symbol of a first PDCCH monitoring occasion in the ith PO or a starting symbol of a slot in which the first PDCCH monitoring occasion in the ith PO is located.

By using the foregoing design, the configuration information may indicate a time domain position of the reference signal in a plurality of different manners.

In a possible design, the network device sends a system message, where the system message carries the configuration information; or the network device sends radio resource control RRC signaling, where the RRC signaling carries the configuration information.

By using the foregoing design, the network device may carry the configuration information in a plurality of manners.

In a possible design, after the network device sends the configuration information for the reference signal set, the network device sends paging downlink control information, where the paging downlink control information carries configuration change information for the ith reference signal set or the K reference signal sets, or the paging downlink control information indicates whether the ith reference signal set or the K reference signal sets are available, or the paging downlink control information indicates an available time range of the ith reference signal set or the K reference signal sets.

By using the foregoing design, the network device may change the configuration information by using the paging downlink control information, or further dynamically indicate a sending status of the reference signal set quickly.

In a possible design, before the network device sends the configuration information for a reference signal set, the network device receives NAS signaling sent by a terminal device entering an idle-state registration phase, where the NAS signaling is used to request the network device to configure the reference signal set for the terminal device; or the network device receives uplink signaling sent by a terminal device in a connected state, where the uplink signaling is used to request the network device to configure the reference signal set for the terminal device.

By using the foregoing design, the terminal device may request the reference signal set in a plurality of manners.

According to a fourth aspect, an embodiment of this application provides a method for receiving a reference signal set, including: receiving, by a terminal device, configuration information for an ith reference signal set in K reference signal sets from a network device; and receiving the ith reference signal set from the network device based on the configuration information, where the ith reference signal set is associated with an ith PO in a PF, the PF includes K POs, and the terminal device corresponds to the ith PO; and in time domain, the ith reference signal set is after a synchronization signal burst set and before the ith PO, where both K and i are positive integers, and i ≤ K.

In a possible design, if i = 1, the ith reference signal set is after the synchronization signal burst set and before a first PO in the PF, and if 2 ≤ i ≤ K, the ith reference signal set is after an (i-1)th PO and before the ith PO.

By using the foregoing design, it can be ensured that a wake-up duration of the terminal device is relatively short, thereby effectively reducing power consumption of the terminal device.

In a possible design, the $i^{th}$ reference signal set includes M reference signals, the M reference signals are sent in a beam-sweeping form, and each reference signal corresponds to one beam direction, where M is a positive integer.

By using the foregoing design, the terminal device may perform beam selection based on the reference signal set, and monitor a paging message based on a PDCCH monitoring occasion corresponding to a selected beam, thereby reducing power consumption of the terminal device.

In a possible design, the M reference signals are M SSSs, M CSI-RSs, or M new sequence-based reference signals.

By using the foregoing design, existing reference signals or newly designed reference signals may be used for the M reference signals.

In a possible design, the M reference signals are distributed on M consecutive symbols; or the M reference signals are distributed on M nonconsecutive symbols, and the configuration information indicates a sending pattern of the M reference signals.

By using the foregoing design, the M reference signals may be flexibly distributed on time domain symbols.

In a possible design, if a quantity M of beams corresponding to the $i^{th}$ reference signal set is equal to a quantity N of beams corresponding to the synchronization signal burst set, a $k^{th}$ reference signal in the $i^{th}$ reference signal set corresponds to a $k^{th}$ physical downlink control channel PDCCH monitoring occasion in the $i^{th}$ PO, where both N and k are positive integers, and k $\leq$ M; if a quantity M of beams corresponding to the $i^{th}$ reference signal set is less than a quantity N of beams corresponding to the synchronization signal burst set, and N is an integer multiple of M, a $k^{th}$ reference signal in the $i^{th}$ reference signal set corresponds to $[(k - 1)*N/M + 1]^{th}$ to $(k*N/M)^{th}$ PDCCH monitoring occasions in the $i^{th}$ PO, where both N and k are positive integers, and k $\leq$ M; if a quantity M of beams corresponding to the $i^{th}$ reference signal set is less than a quantity N of beams corresponding to the synchronization signal burst set, and N is not an integer multiple of M, assuming that

$$x = N - M \left\lfloor \frac{N}{M} \right\rfloor$$

, an $m^{th}$ reference signal in first x reference signals in the $i^{th}$ reference signal set corresponds to $[(m - 1)(\lfloor N/M \rfloor + 1) + 1]^{th}$ to $[m(\lfloor N/M \rfloor + 1)]^{th}$ PDCCH monitoring occasions in the $i^{th}$ PO, and a $j^{th}$ reference signal in last M - x reference signals in the $i^{th}$ reference signal set corresponds to $[x(\lfloor N/M \rfloor + 1) + (j - 1)\lfloor N/M \rfloor + 1]^{th}$ to $[x(\lfloor N/M \rfloor + 1) + j\lfloor N/M \rfloor]^{th}$ PDCCH monitoring occasions in the $i^{th}$ PO, where N, x, m, and j are all positive integers, m $\leq$ x, and j $\leq$ M - x; or if a quantity M of beams corresponding to the $i^{th}$ reference signal set is less than a quantity N of beams corresponding to the synchronization signal burst set, the configuration information indicates at least one PDCCH monitoring occasion in the $i^{th}$ PO corresponding to each of the M reference signals.

By using the foregoing design, based on different relationships between the quantity M of beams corresponding to the reference signal set and the quantity N of beams corresponding to the synchronization signal burst set, a correspondence between the reference signal in the reference signal set and the PDCCH monitoring occasion in each PO in the PF is different. The terminal device may perform beam selection based on the reference signal set, and monitor the paging message based on the PDCCH monitoring occasion corresponding to the selected beam, thereby reducing power consumption of the terminal device.

In a possible design, the configuration information indicates a periodicity and an offset of the $i^{th}$ reference signal set; or the configuration information indicates an offset value between the $i^{th}$ reference signal set and the $i^{th}$ PO, the offset value starts at either a starting symbol of the $i^{th}$ reference signal set or an ending symbol of the $i^{th}$ reference signal set, and the offset value ends at either a starting symbol of a first PDCCH monitoring occasion in the $i^{th}$ PO or a starting symbol of a slot in which the first PDCCH monitoring occasion in the $i^{th}$ PO is located.

By using the foregoing design, the configuration information may indicate a time domain position of the reference signal in a plurality of different manners.

In a possible design, the terminal device receives a system message from the network device, where the system message carries the configuration information; or the terminal device receives RRC signaling from the network device, where the RRC signaling carries the configuration information.

By using the foregoing design, the network device may carry the configuration information in a plurality of manners.

In a possible design, after the terminal device receives the configuration information for the $i^{th}$ reference signal set in the K reference signal sets from the network device, the terminal device receives paging downlink control information from the network device, where the paging downlink control information carries configuration change information for the $i^{th}$ reference signal set or the K reference signal sets, or the paging downlink control information indicates whether the $i^{th}$ reference signal set or the K reference signal sets are available, or the paging downlink control information indicates an available time range of the $i^{th}$ reference signal set or the K reference signal sets.

By using the foregoing design, the network device may change the configuration information by using the paging downlink control information, or further dynamically indicate a sending status of the reference signal set quickly.

In a possible design, before the terminal device receives the configuration information for the ith reference signal set in the K reference signal sets from the network device, the terminal device sends NAS signaling to the network device, where the terminal device is in an idle-state registration phase, and the NAS signaling is used to request the network device to configure the ith reference signal set for the terminal device; or the terminal device sends uplink signaling to the network device, where the terminal device is in a connected state, and the uplink signaling is used to request the network device to configure the ith reference signal set for the terminal device.

By using the foregoing design, the terminal device may request the reference signal set in a plurality of manners.

According to a fifth aspect, an embodiment of this application provides an apparatus for sending a reference signal set, where the apparatus may be a network device, or may be a chip in a network device. The apparatus may include a processing unit, a sending unit, and a receiving unit. When the apparatus is the network device, the processing unit may be a processor, and the sending unit and the receiving unit may be a transceiver. The network device may further include a storage unit, and the storage unit may be a memory. The storage unit is configured to store instructions, and the processing unit executes the instructions stored in the storage unit, so that the network device performs the method according to any one of the first aspect or the possible designs of the first aspect, or the method according to any one of the third aspect or the possible designs of the third aspect. When the apparatus is the chip in the network device, the processing unit may be a processor, and the sending unit and the receiving unit may be an input/output interface, a pin, a circuit, or the like. The processing unit executes the instructions stored in the storage unit, so that the chip performs the method according to any one of the first aspect or the possible designs of the first aspect, or the method according to any one of the third aspect or the possible designs of the third aspect. The storage unit is configured to store instructions, and the storage unit may be a storage unit (for example, a register, or a cache) in the chip, or may be a storage unit (for example, a read-only memory or a random access memory) outside the chip in the network device.

According to a sixth aspect, an embodiment of this application provides an apparatus for receiving a reference signal set, where the apparatus may be a terminal device, or may be a chip in a terminal device. The apparatus may include a processing unit, a sending unit, and a receiving unit. When the apparatus is the terminal device, the processing unit may be a processor, and the sending unit and the receiving unit may be a transceiver. The terminal device may further include a storage unit, and the storage unit may be a memory. The storage unit is configured to store instructions, and the processing unit executes the instructions stored in the storage unit, so that the terminal device performs the method according to any one of the second aspect or the possible designs of the second aspect, or the method according to any one of the fourth aspect or the possible designs of the fourth aspect. When the apparatus is the chip in the terminal device, the processing unit may be a processor, and the sending unit and the receiving unit may be an input/output interface, a pin, a circuit, or the like. The processing unit executes the instructions stored in the storage unit, so that the chip performs the method according to any one of the second aspect or the possible designs of the second aspect, or the method according to any one of the fourth aspect or the possible designs of the fourth aspect. The storage unit is configured to store instructions, and the storage unit may be a storage unit (for example, a register or a cache) in the chip, or may be a storage unit (for example, a read-only memory, or a random access memory) outside the chip in the terminal device.

According to a seventh aspect, an embodiment of this application further provides a computer-readable storage medium. The computer-readable storage medium stores a computer program, and when the computer program runs on a computer, the computer is enabled to perform the methods in the first to the fourth aspects.

According to an eighth aspect, an embodiment of this application further provides a computer program product including a program. When the computer program product runs on a computer, the computer is enabled to perform the methods according to the first to the fourth aspects.

**BRIEF DESCRIPTION OF DRAWINGS**

FIG. 1 is a schematic diagram of a scenario in which a synchronization signal burst set and a PF are not aligned according to this application;

FIG. 2 is a schematic diagram of a scenario in which a CSI-RS is closer to a PO for UE than a synchronization signal burst set according to this application;

FIG. 3 is a schematic architectural diagram of a communications system according to this application;

FIG. 4 is a first overview flowchart of a method for sending a reference signal set according to this application;

FIG. 5(a) to FIG. 5(c) are schematic diagrams of distribution of reference signals on time domain symbols according to this application;

FIG. 6 is a schematic diagram of a correspondence between a beam in a reference signal set and a PDCCH monitoring occasion according to this application;

FIG. 7 is a schematic diagram of determining a position of a reference signal set based on configuration information according to this application;

FIG. 8 is a first schematic diagram of configuration of a reference signal set according to this application;

FIG. 9 is a second overview flowchart of a method for sending a reference signal set according to this application;

FIG. 10 is a second schematic diagram of configuration of a reference signal set according to this application;

FIG. 11 is a first schematic diagram of a structure of an apparatus according to this application; and

FIG. 12 is a second schematic diagram of a structure of an apparatus according to this application.

## DETAILED DESCRIPTION OF EMBODIMENTS

The following describes the embodiments of this application with reference to the accompanying drawings.

This application is mainly applied to a fifth generation wireless communications system (new radio, NR), and may also be applied to other communications systems, for example, a narrowband internet of things (narrowband internet of things, NB-IoT) system, a machine type communication (machine type communication, MTC) system, or a future next-generation communications system.

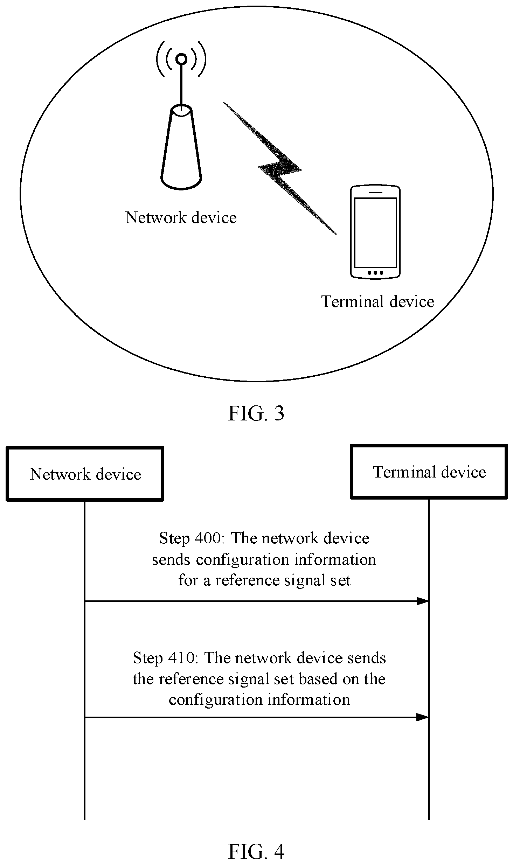

Network elements in the embodiments of this application include a terminal device and a network device. As shown in FIG. 3, a network device and a terminal device constitute a communications system. In the communications system, the network device sends information to the terminal device over a downlink channel, and the terminal device sends information to the network device over an uplink channel. The terminal device may be a mobile phone, a tablet computer, a computer having a wireless transceiver function, an internet of things terminal device, or the like. The terminal device may also be referred to as a mobile station (mobile station), a mobile (mobile), a remote station (remote station), a remote terminal (remote terminal), an access terminal (access terminal), or a user agent, and may also be an automobile in vehicle-to-vehicle (vehicle-to-vehicle, V2V) communication, a machine in machine type communication, or the like. This is not limited herein. The network device may be a base station in various forms, for example, a macro base station, a micro base station (also referred to as a small cell), a relay station, an access point, an evolved NodeB (eNodeB), a wireless fidelity access point (wireless fidelity access point, WiFi AP), a worldwide interoperability for microwave access base station (worldwide interoperability for microwave access base station, WiMAX BS), or the like. This is not limited herein. In addition, in systems that use different radio access technologies, names of a network device capable of providing a radio access function may be different. For example, in an LTE system, the device is referred to as an evolved NodeB (evolved NodeB, eNB or eNodeB), in a 3rd generation (3rd generation, 3G) system, the device is referred to as a NodeB (Node B), and in a new generation system, the device is referred to as a gNB (gNodeB).

The foregoing network elements may be network elements implemented on dedicated hardware, or may be software instances running on dedicated hardware, or virtualized function instances on an appropriate platform. In addition, the embodiments of this application may also be applicable to other future-oriented communications technologies. The network architecture and the service scenario described in this application are intended to describe the technical solutions in this application more clearly, and do not constitute a limitation on the technical solutions provided in this application. A person of ordinary skill in the art may know that: With the evolution of the network architecture and the emergence of new service scenarios, the technical solutions provided in this application are also applicable to similar technical problems.

In the conventional technology, a PF may be associated with one or more POs. When a PF is associated with a plurality of POs, the plurality of POs are usually all located in the PF, or a starting symbol of one PO may be located in the PF but an ending symbol thereof is located in a next radio frame (radio frame) of the PF, or a starting symbol of one PO is located in a next radio frame of the associated PF. In a multi-beam scenario of NR, a synchronization signal burst set includes a plurality of SSBs, that is, the SSBs are sent in a beam-sweeping (beam-sweeping) form. In addition, a paging message is also sent in a beam-sweeping form, that is, one PO consists of a plurality of PDCCH monitoring occasions. A $k^{th}$ PDCCH monitoring occasion corresponds to a $k^{th}$ SSB, where k is a positive integer. The terminal device may consider that the paging message is repeatedly sent on a plurality of beams, and which beam is specifically selected to receive the paging message depends on implementation of the terminal device. Generally, before monitoring the paging message, the terminal device performs beam selection based on an SSB in the synchronization signal burst set, and then monitors the paging message on a PDCCH monitoring occasion corresponding to the selected beam. If UE does not select a beam in advance, the terminal device monitors the paging message on a plurality of PDCCH monitoring occasions (that is, a plurality of beams) to ensure that the paging message is not missed.

As shown in FIG. 4, to reduce power consumption of a terminal device in an RRC_IDLE or RRC_INACTIVE state, an embodiment of this application provides a method for sending a reference signal set. The method includes the following steps.

Step 400: A network device sends configuration information for a reference signal set.

Step 410: The network device sends the reference signal set based on the configuration information.

Correspondingly, the terminal device receives the configuration information for the reference signal set from the network device, and the terminal device receives the reference signal set from the network device based on the configuration information.

The reference signal set is associated with a PF, and in time domain, the reference signal set is after the synchronization signal burst set and before a first PO in the PF.

It should be understood that the reference signal set herein may also be referred to as an additional reference signal set or another name, which is not limited in this application.

In this embodiment of this application, the reference signal set is associated with the PF, that is, the reference signal set is associated with one or more POs associated with the PF. In time domain, the reference signal set being after the synchronization signal burst set and before the first PO in the PF may also be described as follows: In time domain, a time gap between each of the one or more POs associated with the PF and the reference signal set is shorter than a time gap between each of the one or more POs associated with the PF and the synchronization signal burst set. As an optional embodiment, a position of the reference signal set is exactly at a starting position of the PF or at an ending position of a previous frame of the PF. Therefore, a terminal device for which a monitoring occasion is located in the one or more POs may perform AGC tuning, beam selection, and RRM measurement by using the reference signal set, to reduce wake-up times of the terminal device or reduce a wake-up duration of the terminal device, thereby reducing power consumption of the terminal device.

In a possible design, the reference signal set includes M reference signals, the M signals are sent in a beam-sweeping form, and each reference signal corresponds to one beam direction, where M is a positive integer. Therefore, the terminal device may perform beam selection based on the M reference signals included in the reference signal set, and monitor a paging message on a PDCCH monitoring occasion corresponding to a selected beam, thereby reducing power consumption of the terminal device.

It should be understood that this embodiment of this application is mainly applicable to a multi-beam (that is, M > 1) scenario. The introduction of the M reference signals sent in the beam-sweeping form can narrow a beam range in which the terminal device monitors the paging message, thereby reducing power consumption of the terminal device. In addition, for a single-beam (that is, M = 1) scenario, this embodiment of this application may also be applicable. The introduced reference signal set may be used for RRM measurement and AGC tuning, thereby also reducing power consumption of the terminal device.

In a possible design, the M reference signals are M secondary synchronization signals (secondary synchronization signal, SSS), or M CSI-RSs, or M new sequence-based reference signals. As an optional embodiment, when the M reference signals are M SSSs, the reference signal set may be used for RRM measurement, to avoid power consumption generated when the terminal device is woken up to perform RRM measurement separately on an SSB in the synchronization signal burst set, thereby reducing power consumption of the terminal device for performing RRM measurement. For example, the M SSSs may also assist the SSB in the synchronization signal burst set in performing RRM measurement, thereby providing more RRM measurement opportunities, and ensuring that RRM measurement accuracy is not affected.

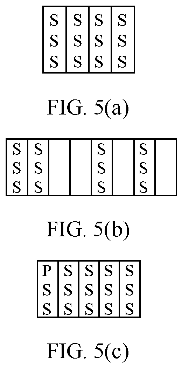

In a possible design, the M reference signals are distributed on M consecutive symbols; or the M reference signals are distributed on M nonconsecutive symbols. In this case, the configuration information indicates a sending pattern of the M reference signals. For example, M = 4, and the reference signals are SSSs. In FIG. 5(a), one reference signal set includes four SSSs that are distributed on four consecutive symbols, and each SSS corresponds to one beam direction. In FIG. 5(b), one reference signal set includes four SSSs, symbols in which the four SSSs are located may be nonconsecutive, a specific sending pattern (pattern) is configured by the network device, and each SSS corresponds to one beam direction. In FIG. 5(c), one reference signal set includes four SSSs, each SSS corresponds to one beam direction, and the network device may further send one primary synchronization signal (primary synchronization signal, PSS) on a symbol before a first SSS, for AGC tuning.

Further, assuming that a quantity of SSBs in a synchronization signal burst set that are actually sent is N, a quantity of beams corresponding to the synchronization signal burst set is N, and the SSBs are in a one-to-one correspondence with PDCCH monitoring occasions. The reference signal set includes M reference signals, and then a quantity of beams corresponding to the reference signal set is M. To enable the terminal device to perform beam selection based on the reference signal set, and narrow a beam range in which the terminal device monitors a paging message, a quantity M of beams corresponding to the reference signal set is less than or equal to a quantity N of beams corresponding to the synchronization signal burst set. For different relationships between the quantity M of beams corresponding to the reference signal set and the quantity N of beams corresponding to the synchronization signal burst set, the following describes a correspondence between the reference signal in the reference signal set and the PDCCH monitoring occasion.

First relationship: If the quantity M of beams corresponding to the reference signal set is equal to the quantity N of beams corresponding to the synchronization signal burst set, a $k^{th}$ reference signal in the reference signal set corresponds to a $k^{th}$ PDCCH monitoring occasion in each PO in the PF, where both N and k are positive integers, and $k \leq M$. In this case, a beam corresponding to one reference signal in the reference signal set covers a beam corresponding to one SSB in the synchronization signal burst set. Correspondingly, a beam corresponding to one reference signal corresponds to a beam corresponding to one paging message, that is, one reference signal corresponds to one PDCCH monitoring occasion in a PO. If a terminal device performs beam selection based on a reference signal in a reference signal set associated with a PF in which a PO for the terminal device is located, and selects a beam having best signal quality, the terminal device only needs to monitor a paging message on a PDCCH monitoring occasion corresponding to the selected beam. For example, when M = N = 4, a first reference signal corresponds to a first PDCCH monitoring occasion in each PO, a second reference signal corresponds to a second PDCCH monitoring occasion in each PO, a third reference signal corresponds to a third PDCCH monitoring occasion in each PO, and a fourth reference signal corresponds to a fourth PDCCH monitoring occasion in each PO.

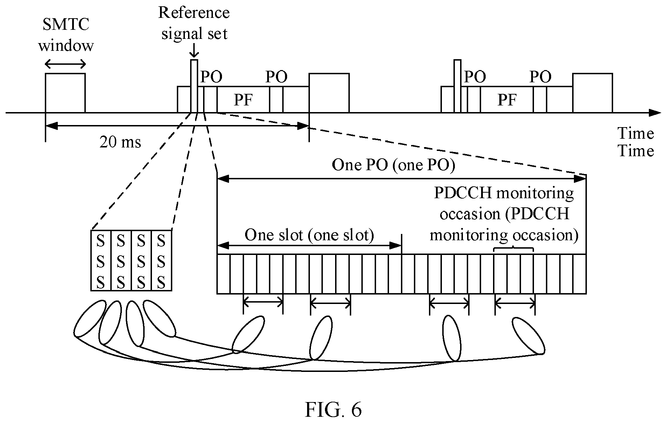

As shown in FIG. 6, a periodicity of an SSB is 20 ms, and a periodicity of an SMTC is also 20 ms. One of every two frames is a PF, and the synchronization signal burst set is not aligned with the PF, that is, a radio frame in which the SSB is located is just staggered with the PF. In addition to the synchronization signal burst set, a reference signal set is introduced and configured to be associated with the PF. The reference signal set is located at a position at which the PF starts, and one PF includes two POs. A quantity N of SSBs in one synchronization signal burst set that are actually sent is 4, and a quantity M of reference signals included in the reference signal set is 4. In the reference signal set, if the four SSS signals are located on consecutive symbols, a $k^{th}$ SSS corresponds to the $k^{th}$ PDCCH monitoring occasion in each PO. UE on the two POs included in the PF may perform AGC tuning, beam selection, and RRM measurement based on a reference signal set associated with the PF, without no need to wake up in advance within an SMTC window before the PF, thereby reducing a wake-up duration of the UE, and reducing power consumption of the UE.

Second relationship: If the quantity M of beams corresponding to the reference signal set is less than the quantity N of beams corresponding to the synchronization signal burst set, a beam corresponding to one reference signal in the reference signal set is a wide beam, and a beam corresponding to one reference signal covers a beam corresponding to at least one SSB in the synchronization signal burst set. Correspondingly, a beam corresponding to one reference signal corresponds to a beam corresponding to at least one paging message, that is, one reference signal corresponds to at least one PDCCH monitoring occasion in a PO. This case may be specifically subdivided into the following two scenarios.

Scenario 1: N is an integer multiple of M.

In this case, a $k^{th}$ reference signal in the reference signal set corresponds to [(k - 1)*N/M + 1]$^{th}$ to (k*N/M)$^{th}$ PDCCH monitoring occasions in each PO in the PF, where both N and k are positive integers, and k ≤ M. If a terminal device performs beam selection based on a reference signal in a reference signal set associated with a PF in which a PO for the terminal device is located, and selects a beam having best signal quality, the terminal device only needs to monitor a paging message on a plurality of PDCCH monitoring occasions corresponding to the reference signal. For example, when M = 2, and N = 4, a first reference signal corresponds to a first PDCCH monitoring occasion and a second PDCCH monitoring occasion in each PO, and a second reference signal corresponds to a third PDCCH monitoring occasion and a fourth PDCCH monitoring occasion in each PO.

Scenario 2: N is not an integer multiple of M.

In this case, assuming that $x = N - M \left\lfloor \frac{N}{M} \right\rfloor$, an $i^{th}$ reference signal in the first x reference signals in the reference signal set corresponds to [(i - 1)(⌊N/M⌋ + 1) + 1]$^{th}$ to [i(⌊N/M⌋ + 1)]$^{th}$ PDCCH monitoring occasions in each PO in the PF, and a $j^{th}$ reference signal in the last M - x reference signals in the reference signal set corresponds to [x(⌊N/M⌋ + 1) + (j - 1)⌊N/M⌋ + 1]$^{th}$ to [x(⌊N/M⌋ + 1) + j⌊N/M⌋]$^{th}$ PDCCH monitoring occasions in each PO in the PF, where N, x, i, and j are all positive integers, i ≤ x, and j ≤ M - x. For example, when N = 14, and M = 4, a $k^{th}$ reference signal in the first two reference signals in the reference signal set corresponds to [(k - 1)*4 + 1]$^{th}$ to (k*4)$^{th}$ PDCCH monitoring occasions. To be specific, a first reference signal (k = 1) corresponds to first to fourth PDCCH monitoring occasions, and a second reference signal (k = 2) corresponds to fifth to eighth PDCCH monitoring occasions. A $k^{th}$ reference signal in the last two reference signals in the reference signal set corresponds to [8 + (k - 1)*3 + 1]$^{th}$ to [8 + k*3]$^{th}$ PDCCH monitoring occasions. To be specific, a third reference signal (k = 1) corresponds to ninth to eleventh PDCCH monitoring occasions, and a fourth reference signal (k = 2) corresponds to twelfth to fourteenth PDCCH monitoring occasions.

It may be understood that when N is not an integer multiple of M, the foregoing correspondence is merely one of a plurality of possible manners, and a protocol may also specify another corresponding manner. For example, the following is another corresponding manner.

It is assumed that $x = N - M \left\lfloor \frac{N}{M} \right\rfloor$, a j$^{th}$ reference signal in the first M - x reference signals in the reference signal set corresponds to [(j - 1) ⌊N/M⌋ + 1]$^{th}$ to [j⌊N/M⌋]$^{th}$ PDCCH monitoring occasions in each PO in the PF, and an i$^{th}$ reference signal in the last x reference signals in the reference signal set corresponds to [M-x) ⌊N/M⌋ + (i - 1)(⌊N/M⌋ + 1) + 1]$^{th}$ to [M - x)⌊N/M⌋ + i(⌊N/M⌋ + 1)]$^{th}$ PDCCH monitoring occasions in each PO in the PF, where N, x, i, and j are all positive integers, i ≤ x, and j ≤ M - x. For example, when N = 14, and M = 4, a k$^{th}$

reference signal in the first two reference signals in the reference signal set corresponds to $[(k - 1)*3 + 1]^{th}$ to $(k*3)^{th}$ PDCCH monitoring occasions. To be specific, a first reference signal (k = 1) corresponds to first to third PDCCH monitoring occasions, and a second reference signal (k = 2) corresponds to fourth to sixth PDCCH monitoring occasions. A $k^{th}$ reference signal in the last two reference signals in the reference signal set corresponds to $[6 + (k-1)*4 + 1]^{th}$ to $[6 + k*4]^{th}$ PDCCH monitoring occasions. To be specific, a third reference signal (k = 1) corresponds to seventh to tenth PDCCH monitoring occasions, and a fourth reference signal (k = 2) corresponds to eleventh to fourteenth PDCCH monitoring occasions.

In addition, for the case in which the quantity M of beams corresponding to the reference signal set is less than the quantity N of beams corresponding to synchronization signal burst set, the configuration information may be used to indicates at least one PDCCH monitoring occasion corresponding to each of the M reference signals. For example, when M = 3, and N = 8, the configuration information may indicate that a first reference signal corresponds to first to third PDCCH monitoring occasions in each PO, a second reference signal corresponds to fourth and fifth PDCCH monitoring occasions in each PO, and a third reference signal corresponds to sixth to eighth PDCCH monitoring occasions in each PO.

Further, the configuration information further needs to indicate a position of the reference signal set, specifically in, for example but not limited to, the following two manners.

Manner 1: The configuration information further indicates a periodicity (periodicity) and an offset (offset) of the reference signal set.

For example, a periodicity and an offset of the reference signal set that are indicated by the configuration information are T, measured in ms, and offset, measured in ms. It may be understood that sizes of T and offset may indicate a quantity of subframes. The terminal device may determine, based on T and offset, a subframe in which a starting symbol of the reference signal set is located. Specifically, the terminal device determines, based on the following formula, the subframe in which the starting symbol of the reference signal set is located:

SFN mod $T$ = (FLOOR ($Offset$/10))
subframe = $Offset$ mod 10
with $T$ = CEIL($Periodicity$/10)

where SFN is a system frame number.

Example 1: If periodicity = 20 ms, and offset = 0 ms, then T = 2, SFN mod 2 = (floor(0/10)) = 0, and SFN can be calculated as: 0, 2, 4, 6, .... In addition, according to subframe = $Offset$ mod 10, it can be determined that subframe = 0. That is, the subframe in which the starting symbol of the reference signal set is located is a first subframe of a radio frame with an even frame number.

Example 2: If periodicity = 20 ms, and offset = 10 ms, then T = 2, SFN mod 2 = (floor(10/10)) = 1, and SFN can be calculated as: 1, 3, 5, 7, .... In addition, according to subframe = $Offset$ mod 10, it can be determined that subframe = 0. That is, the subframe in which the starting symbol of the reference signal set is located is a first subframe of a radio frame with an odd frame number.

Moreover, in addition to indicating the periodicity and the offset of the reference signal set, the configuration information may further need to indicate other information. For example, the configuration information further needs to indicate which slots of a subframe and which symbols of the slots the reference signal set is located in.

It may be understood that in Manner 1, the reference signal set is separately configured by using the configuration information, which is independent of configuration of the paging information (namely, the PF and the PO), and it relies on the network device to configure the reference signal set as close to the PF as possible.

Manner 2: The configuration information indicates an offset value between the reference signal set and the first PO of the PF, the offset value starts at either a starting symbol of the reference signal set or an ending symbol of the reference signal set, and the offset value ends at either a starting symbol of a first PDCCH monitoring occasion in the first PO or a starting symbol of a slot in which the first PDCCH monitoring occasion in the first PO is located.

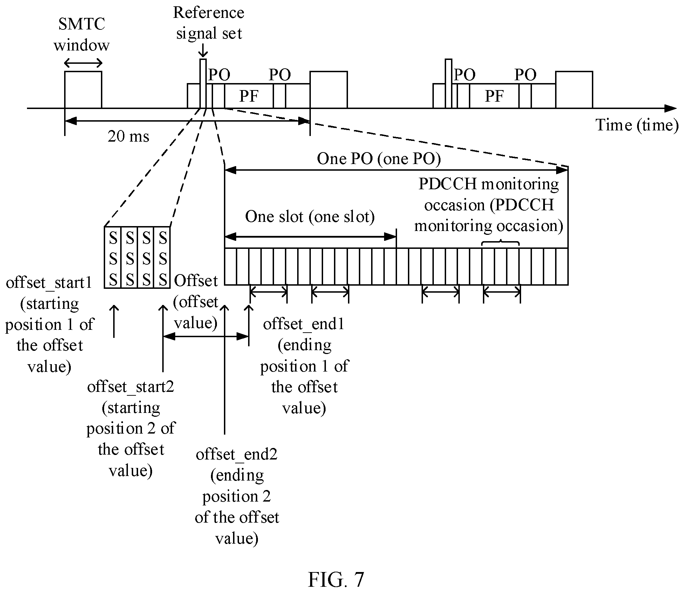

As shown in FIG. 7, a starting position of the offset value may be a starting symbol (denoted as offset_start1) of the reference signal set, or an ending symbol (denoted as offset_start2) of the reference signal set. An ending position of the offset value may be a starting symbol (denoted as offset_end1) of a first PDCCH monitoring occasion in the first PO in the PF, or a starting symbol (denoted as offset end2) of a slot in which the first PDCCH monitoring occasion in the first PO in the PF is located. For example, the network device and the terminal device agree that offset_start2 is the starting position, offset_end1 is the ending position, and the offset value is indicated by using the configuration information. As shown in FIG. 7, the network device and the terminal device may infer a position of the ending symbol of the reference signal set based on a position of the first PO in the PF, thereby determining a position of the entire reference signal set.

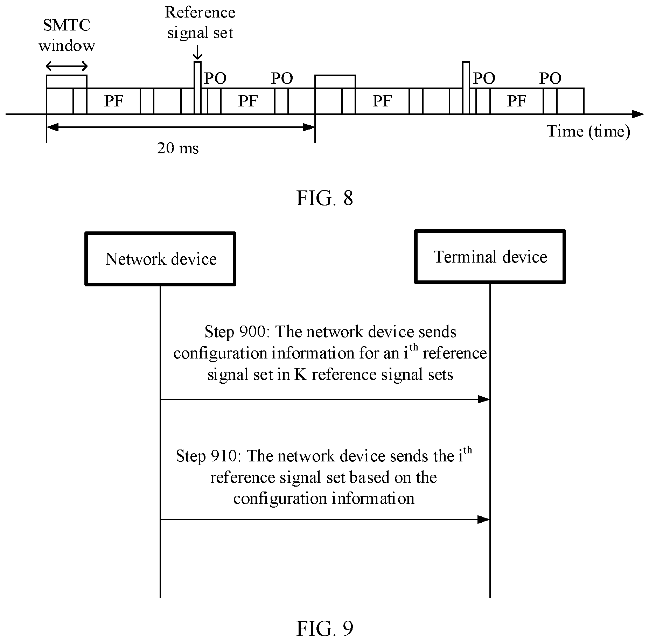

In addition, it should be understood that not every PF needs to be configured with an associated reference signal set. This depends on implementation of the network device. In addition, if a PF is aligned with an SSB in the synchronization signal burst set, that is, a frame in which the PF and the SSB are located is a same frame, the PF may not be configured with the reference signal set. For example, as shown in FIG. 8, an SSB periodicity is 20 ms, an SMTC periodicity is also 20 ms, and each frame is a PF. In this case, the network device only needs to configure a reference signal set in a PF without an SSB.

In addition, before the network device sends the configuration information for the reference signal set, the terminal device may request the reference signal set from the network device. In a possible design, the network device receives non-access stratum (Non-access stratum, NAS) signaling sent by a terminal device entering an idle-state registration phase, where the NAS signaling is used to request the network device to configure the reference signal set for the terminal device; or the network device receives uplink signaling sent by a terminal device in a connected state, where the uplink signaling is used to request the network device to configure the reference signal set for the terminal device. As an optional embodiment, the network device receives uplink signaling sent by a terminal device in a connected state, where the uplink signaling is used to request the network device to configure the reference signal set for the terminal device after the terminal device enters an RRC_IDLE or RRC_INACTIVE state.

If the terminal device leaves a coverage area of the network device, the reference signal set may not be required any more. In this case, for the terminal device in the RRC_IDLE state, the terminal device reports to the network device when leaving a tracking area (tracking area, TA). In this case, the network device in the TA in which the terminal device is previously located may choose not to send the reference signal set. For the terminal device in the RRC _INACTIVE state, when leaving a radio access network area (RAN area), the terminal device also reports to the network device, or the terminal device reports, with a specific periodicity, whether the terminal device is in the RAN area, so that the network device may determine, based on reported information of the terminal device, whether to continue sending the reference signal set. It should be understood that the network device may not stop sending the reference signal set due to leaving of one terminal device, because a PO associated with a PF corresponds to a plurality of terminal devices.

Further, the network device may send the configuration information in a plurality of manners. In a possible design, the network device sends a system message, where the system message carries the configuration information. For example, the network device may broadcast and send the configuration information for the reference signal set in remaining minimum system information (remaining minimum system information, RMSI), namely, a system message block (system information block 1, SIB 1), or may send the configuration information for the reference signal set in another system message (for example, a SIB 2). Alternatively, the network device sends RRC signaling, where the RRC signaling carries the configuration information. For example, the network device may carry the configuration information in an RRC release (RRC Release) message.

After the network device sends the configuration information for the reference signal set, the network device may further change the configuration information. In a possible design, the network device sends paging downlink control information, where the paging downlink control information carries configuration change information for the reference signal set, or the paging downlink control information indicates whether the reference signal set is available, or the paging downlink control information indicates an available time range of the reference signal set.

As an optional embodiment, the network device informs, by using a short message (including a short message indicator (short message indicator) field and a short message (short message) field) in the paging downlink control information, the UE that the system message is changed. The UE rereads the system message to obtain new configuration information for the reference signal set.

As an optional embodiment, the network device configures a timer for the UE by using the paging downlink control information. When the timer performs timing, the reference signal set is available. After the timer finishes timing, the UE cannot assume that the reference signal set is available. For example, in the following scenarios, the network device may change the configuration information by using the paging the downlink control information. Scenario 1: Based on a current load status of a cell, the network device chooses to send the reference signal set when the load of the cell is relatively low, and stops sending the reference signal set when the load of the cell is relatively high. Scenario 2: Based on a previous load status of a cell, the network device chooses to send the reference signal set in night time, and stops sending the reference signal set in day time.

As shown in FIG. 9, to reduce power consumption of a terminal device in an RRC_IDLE or RRC _INACTIVE state, an embodiment of this application provides a method for sending a reference signal set. The method includes the following steps.

Step 900: A network device sends configuration information for an $i^{th}$ reference signal set in K reference signal sets.

Step 910: The network device sends the $i^{th}$ reference signal set based on the configuration information.

Correspondingly, the terminal device receives the configuration information for the $i^{th}$ reference signal set from the network device. The terminal device receives the $i^{th}$ reference signal set from network device based on the configuration information.

The $i^{th}$ reference signal set is associated with an $i^{th}$ PO in a PF, the PF includes K POs, and the terminal device corresponds to the $i^{th}$ PO. In time domain, the $i^{th}$ reference signal set is after a synchronization signal burst set and before the $i^{th}$ PO, where both K and i are positive integers, and $i \leq K$.

It should be understood that the network device sends configuration information for each of the K reference signal sets, and sends K reference signal sets in total based on the configuration information for each of the K reference signal sets. However, for a terminal device, the terminal device may receive only configuration information of a reference signal set associated with a PO corresponding to the terminal device. Therefore, the terminal device needs to receive only the reference signal set associated with the PO corresponding to the terminal device. It may be understood that if a terminal device receives configuration information of all the K reference signal sets, the terminal device may also receive other reference signal sets than the reference signal set associated with the PO corresponding to the terminal device.

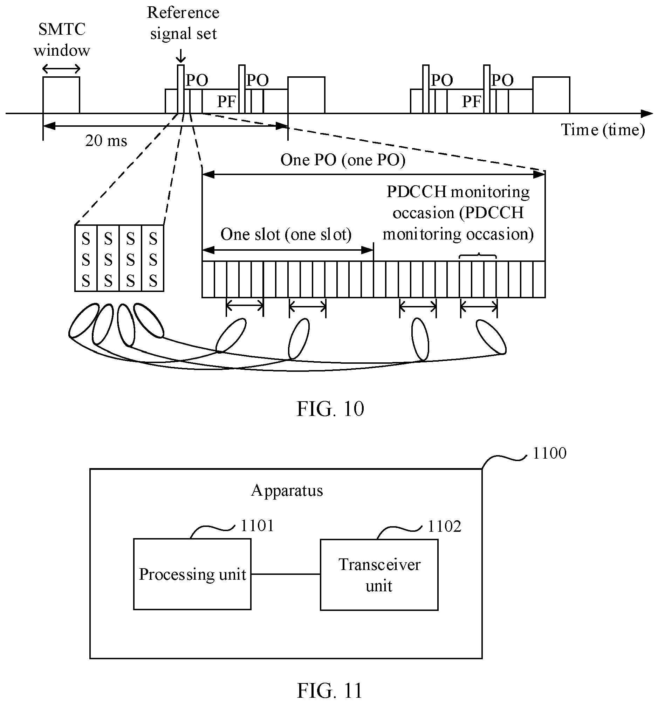

In a possible design, if i = 1, the $i^{th}$ reference signal set is after the synchronization signal burst set and before a first PO in the PF, and if $2 \leq i \leq K$, the $i^{th}$ reference signal set is after an $(i-1)^{th}$ PO and before the $i^{th}$ PO. As shown in FIG. 10, a reference signal set is configured before each PO.

It should be noted that time domain structures of reference signal sets associated with different POs may be the same or may be different. Time gaps (time gaps) between different POs and associated reference signal sets may be the same or may be different. The foregoing description actually depends on how the network device is configured and how a system slot format (slot format) is configured.

Different from the embodiment shown in FIG. 4, the network device configures one reference signal set for each PO in the PF, and the reference signal set is associated with the PO. Therefore, resource overheads of the embodiment shown in FIG. 9 are higher than resource overheads of the embodiment shown in FIG. 4. For other designs of the reference signal set, refer to the embodiment shown in FIG. 4. Same parts are not described herein again.

In the foregoing embodiments provided in this application, solutions of the communication method provided in the embodiments of this application are described separately from perspectives of network elements and interaction between the network elements. It may be understood that, to implement the foregoing functions, each network element, such as a network device and a terminal device, includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Same as the foregoing concept, as shown in FIG. 11, an embodiment of this application further provides an apparatus 1100. The apparatus 1100 includes a transceiver unit 1102 and a processing unit 1101.

In an example, the apparatus 1100 is configured to implement a function of the network device in the foregoing method. The apparatus may be a network device, or may be an apparatus in a network device.

The processing unit 1101 invokes the transceiver unit 1102 to send configuration information for a reference signal set; and the processing unit 1101 further invokes the transceiver unit 1102 to send the reference signal set based on the configuration information, where the reference signal set is associated with a PF, and in time domain, the reference signal set is after a synchronization signal burst set and before a first PO in the PF.

Additionally or alternatively, the processing unit 1101 invokes the transceiver unit 1102 to send configuration information for an $i^{th}$ reference signal set in K reference signal sets; and the processing unit 1101 further invokes the transceiver unit 1102 to send the $i^{th}$ reference signal set based on the configuration information, where the $i^{th}$ reference signal set is associated with an $i^{th}$ PO in a PF, and the PF includes K POs; and in time domain, the $i^{th}$ reference signal set is after a synchronization signal burst set and before the $i^{th}$ PO, both K and i are positive integers, and $i \leq K$.

In an example, the apparatus 1100 is configured to implement a function of the terminal device in the foregoing method. The apparatus may be a terminal device, or may be an apparatus in a terminal device.

The processing unit 1101 invokes the transceiver unit 1102 to receive configuration information for a reference signal set from a network device; and the processing unit 1101 further invokes the transceiver unit 1102 to receive the reference signal set from the network device based on the configuration information, where the reference signal set is associated with a paging frame PF, and in time domain, the reference signal set is after a synchronization signal burst set and before a first paging occasion PO in the PF.

Additionally or alternatively, the processing unit invokes the transceiver unit to receive configuration information for an $i^{th}$ reference signal set in K reference signal sets from the network device; and the processing unit further invokes the transceiver unit to receive the $i^{th}$ reference signal set from the network device based on the configuration information, where the $i^{th}$ reference signal set in the K reference signal sets is associated with an $i^{th}$ PO in a PF, the PF includes K POs, and the terminal device corresponds to the $i^{th}$ PO; and in time domain, the $i^{th}$ reference signal set is after a synchronization signal burst set and before the $i^{th}$ PO, both K and i are positive integers, and $i \leq K$.

For specific execution processes of the processing unit 1101 and the transceiver unit 1102, refer to the description in the foregoing method embodiments. Module division in the embodiments of this application is illustrative, and is merely logical function division. There may be other division manners in actual implementation. In addition, function modules in the embodiments of this application may be integrated into one processor, or may exist physically and independently, or two or more modules may be integrated into one module. The integrated module may be implemented in a form of hardware, or may be implemented in a form of a software function module.

As another optional variation, the apparatus may be a chip system. In this embodiment of this application, the chip system may include a chip, or may include a chip and other discrete devices. For example, the apparatus includes a processor and an interface, and the interface may be an input/output interface. The processor completes a function of the processing unit 1101, and the interface completes a function of the transceiver unit 1102. The apparatus may further include a memory. The memory is configured to store a program that can run on the processor. When the processor executes the program, the methods in the embodiments shown in FIG. 4 and/or FIG. 9 are implemented.

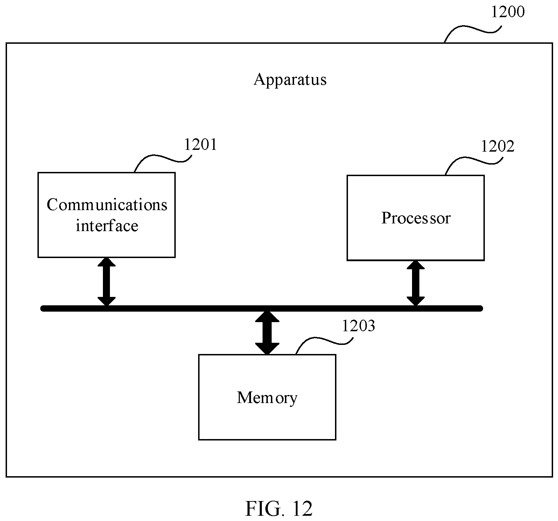

Same as the foregoing concept, as shown in FIG. 12, an embodiment of this application further provides apparatus 1200. The apparatus 1200 includes: a communications interface 1201, at least one processor 1202, and at least one memory 1203. The communications interface 1201 is configured to communicate with other devices via a transmission medium, so that an apparatus in the apparatus 1200 can communicate with the other devices. The memory 1203 is configured to store a computer program. The processor 1202 invokes the computer program stored in the memory 1203, and sends and receives data via the communications interface 1201 to implement the method in the foregoing embodiment.

For example, when the apparatus is a network device, the memory 1203 is configured to store a computer program; and the processor 1202 invokes the computer program stored in the memory 1203 to perform, via the communications interface 1201, the method performed by the network device in the foregoing embodiment. When the apparatus is a terminal device, the memory 1203 is configured to store a computer program; and the processor 1202 invokes the computer program stored in the memory 1203 to perform, via the communications interface 1201, the method performed by the terminal device in the foregoing embodiment.

In this embodiment of this application, the communications interface 1201 may be a transceiver, a circuit, a bus, a module, or another type of communications interface. The processor 1202 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor. The steps of the methods disclosed with reference to the embodiments of this application may be directly performed by a hardware processor, or may be performed by using a combination of hardware in the processor and a software module. The memory 1203 may be a non-volatile memory, such as a hard disk drive (hard disk drive, HDD), a solid-state drive (solid-state drive, SSD), or the like, or may be a volatile memory (volatile memory), such as a random access memory (random-access memory, RAM). A memory is any other medium that can be used to carry or store expected program code in a form of instructions or data structures and can be accessed by a computer, but is not limited thereto. The memory in the embodiments of this application may also be a circuit or any other apparatus that can implement a storage function. The memory 1203 is coupled to the processor 1202. The couplings in the embodiments of this application are indirect couplings or communication connections between apparatuses, units, or modules, may be in electrical, mechanical, or another forms, and are used for information exchange between apparatuses, units, or modules. As another implementation, the memory 1203 may alternatively be located outside the apparatus 1200. The processor 1202 may operate in collaboration with the memory 1203. The processor 1202 may execute program instructions stored in the memory 1203. At least one of the at least one memory 1203 may also be included in the processor 1202. A connection medium between the communications interface 1201, the processor 1202, and the memory 1203 is not limited in the embodiments of this application. For example, in this embodiment of this application, in FIG. 12, the memory 1203, the processor 1202, and the communications interface 1201 may be connected through a bus. The bus may be classified into an address bus, a data bus, a control bus, and the like.

It may be understood that the apparatus in the embodiment shown in FIG. 11 may be implemented by the apparatus 1200 shown in FIG. 12. Specifically, the processing unit 1101 may be implemented by the processor 1202, and the transceiver unit 1102 may be implemented by the communications interface 1201.

An embodiment of this application further provides a computer-readable storage medium. The computer-readable storage medium stores a computer program and when the computer program runs on a computer, the computer is enabled to perform the methods described in the foregoing embodiments.

All or some of the foregoing methods in the embodiments of this application may be implemented by software, hardware, firmware, or any combination thereof. When software is used to implement the embodiments, the embodiments may be implemented completely or partially in a form of a computer program product. The computer program product includes one or more computer instructions. When the computer instructions are loaded and executed on a computer, the procedures or functions according to the embodiments of the present invention are all or partially generated. The computer may be a general-purpose computer, a dedicated computer, a computer network, a network device, user equipment, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc, DVD for short)), a semiconductor medium (for example, a solid-state drive (Solid State drive, SSD)), or the like.

The foregoing embodiments are merely used to describe the technical solutions of this application in detail. The foregoing embodiments are merely intended to help understand the methods of the embodiments of the present invention, and shall not be construed as a limitation on the embodiments of the present invention. Any variation or replacement readily figured out by a person skilled in the art shall fall within the protection scope of the embodiments of the present invention.

## Claims

1. A method for sending a reference signal set, comprising:

   sending, by a network device, configuration information for a reference signal set; and
   sending, by the network device, the reference signal set based on the configuration information, wherein the reference signal set is associated with a paging frame PF, and in time domain, the reference signal set is after a synchronization signal burst set and before a first paging occasion PO in the PF.

2. The method according to claim 1, wherein the reference signal set comprises M reference signals, the M reference signals are sent in a beam-sweeping form, and each reference signal corresponds to one beam direction, wherein M is a positive integer.

3. The method according to claim 2, wherein the M reference signals are M secondary synchronization signals SSSs, M channel state information reference signals CSI-RSs, or M new sequence-based reference signals.

4. The method according to claim 2 or 3, wherein the M reference signals are distributed on M consecutive symbols; or the M reference signals are distributed on M nonconsecutive symbols, and the configuration information indicates a sending pattern of the M reference signals.

5. The method according to any one of claims 2 to 4, wherein if a quantity M of beams corresponding to the reference signal set is equal to a quantity N of beams corresponding to the synchronization signal burst set, a $k^{th}$ reference signal in the reference signal set corresponds to a $k^{th}$ physical downlink control channel PDCCH monitoring occasion in each PO in the PF, wherein both N and k are positive integers, and $k \leq M$;

   if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, wherein both N and k are positive integers, and $k \leq M$;
   if a quantity M of beams corresponding to the reference signal set is less than a quantity N of beams corresponding to the synchronization signal burst set, and N is not an integer multiple of M, assuming that $x = N - M \left\lfloor \frac{N}{M} \right\rfloor$, an $i^{th}$ reference signal in the first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{th}$ reference signal in the last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j \lfloor N/M \rfloor]^{th}$ PDCCH monitoring occasions in each PO in the PF, wherein N, x, i, and j are all positive integers, $i \leq x$, and $j \leq M - x$; or
   if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

6. The method according to any one of claims 1 to 5, wherein the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of the first PDCCH monitoring occasion in the first PO or a starting symbol of a slot in which the first PDCCH monitoring occasion in the first PO is located.

7.  A method for receiving a reference signal set, comprising:

    receiving, by a terminal device, configuration information for a reference signal set from a network device; and
    receiving, by the terminal device, the reference signal set from the network device based on the configuration information, wherein the reference signal set is associated with a paging frame PF, and in time domain, the reference signal set is after a synchronization signal burst set and before a first paging occasion PO in the PF.

8.  The method according to claim 7, wherein the reference signal set comprises M reference signals, the M reference signals are sent in a beam-sweeping form, and each reference signal corresponds to one beam direction, wherein M is a positive integer.

9.  The method according to claim 8, wherein the M reference signals are M secondary synchronization signals SSSs, M channel state information reference signals CSI-RSs, or M new sequence-based reference signals.

10. The method according to claim 8 or 9, wherein the M reference signals are distributed on M consecutive symbols; or the M reference signals are distributed on M nonconsecutive symbols, and the configuration information indicates a sending pattern of the M reference signals.

11. The method according to any one of claims 8 to 10, wherein if a quantity M of beams corresponding to the reference signal set is equal to a quantity N of beams corresponding to the synchronization signal burst set, a $k^{th}$ reference signal in the reference signal set corresponds to a $k^{th}$ physical downlink control channel PDCCH monitoring occasion in each PO in the PF, wherein both N and k are positive integers, and $k \le M$;

    if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, wherein both N and k are positive integers, and $k \le M$;
    if a quantity M of beams corresponding to the reference signal set is less than a quantity N of beams corresponding to the synchronization signal burst set, and N is not an integer multiple of M, assuming that $x = N - M \left\lfloor \frac{N}{M} \right\rfloor$ , an $i^{th}$ reference signal in the first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{th}$ reference signal in the last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j \lfloor N/M \rfloor]^{th}$ PDCCH monitoring occasions in each PO in the PF, wherein N, x, i, and j are all positive integers, $i \le x$, and $j \le M - x$; or
if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

12. The method according to any one of claims 7 to 11, wherein the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of the first PDCCH monitoring occasion in the first PO or a starting symbol of a slot in which the first PDCCH monitoring occasion in the first PO is located.

13. A method for sending a reference signal set, comprising:

    sending, by a network device, configuration information for an $i^{th}$ reference signal set in K reference signal sets; and
    sending, by the network device, the $i^{th}$ reference signal set based on the configuration information, wherein the $i^{th}$ reference signal set is associated with an $i^{th}$ PO in a PF, the PF comprises K POs, and in time domain, the $i^{th}$ reference signal set is after a synchronization signal burst set and before the $i^{th}$ PO, wherein both K and i are positive integers, and $i \le K$.

14. The method according to claim 13, wherein if i = 1, the $i^{th}$ reference signal set is after the synchronization signal burst set and before a first PO in the PF, and if $2 \le i \le K$, the $i^{th}$ reference signal set is after an $(i-1)^{th}$ PO and before the $i^{th}$ PO.

15. The method according to claim 13 or 14, wherein the i<sup>th</sup> reference signal set comprises M reference signals, the M reference signals are sent in a beam-sweeping form, and each reference signal corresponds to one beam direction, wherein M is a positive integer.

16. The method according to claim 15, wherein if a quantity M of beams corresponding to the i<sup>th</sup> reference signal set is equal to a quantity N of beams corresponding to the synchronization signal burst set, a k<sup>th</sup> reference signal in the i<sup>th</sup> reference signal set corresponds to a k<sup>th</sup> physical downlink control channel PDCCH monitoring occasion in the i<sup>th</sup> PO, wherein both N and k are positive integers, and k ≤ M;

if a quantity M of beams corresponding to the i<sup>th</sup> reference signal set is less than a quantity N of beams corresponding to the synchronization signal burst set, and N is an integer multiple of M, a k<sup>th</sup> reference signal in the i<sup>th</sup> reference signal set corresponds to [(k - 1)*N/M + 1]<sup>th</sup> to (k*N/M)<sup>th</sup> PDCCH monitoring occasions in the i<sup>th</sup> PO, wherein both N and k are positive integers, and k ≤ M;
if a quantity M of beams corresponding to the i<sup>th</sup> reference signal set is less than a quantity N of beams corresponding to the synchronization signal burst set, and N is not an integer multiple of M, assuming that $x = N - M \left\lfloor \frac{N}{M} \right\rfloor$, an n<sup>th</sup> reference signal in the first x reference signals in the i<sup>th</sup> reference signal set corresponds to [(m-1)(⌊N/M⌋ + 1) + 1]<sup>th</sup> to [m(⌊N/M⌋ + 1)]<sup>th</sup> PDCCH monitoring occasions in the i<sup>th</sup> PO, and a j<sup>th</sup> reference signal in the last M - x reference signals in the i<sup>th</sup> reference signal set corresponds to [x(⌊N/M⌋ + 1) + (j - 1)⌊N/M⌋ + 1]<sup>th</sup> to [x(⌊N/M⌋ + 1) + j⌊N/M⌋]<sup>th</sup> PDCCH monitoring occasions in the i<sup>th</sup> PO, wherein N, x, m, and j are all positive integers, m ≤ x, and j ≤ M - x; or
if a quantity M of beams corresponding to the i<sup>th</sup> reference signal set is less than a quantity N of beams corresponding to the synchronization signal burst set, the configuration information indicates at least one PDCCH monitoring occasion in the i<sup>th</sup> PO corresponding to each of the M reference signals.

17. A method for receiving a reference signal set, comprising:

receiving, by a terminal device, configuration information for an i<sup>th</sup> reference signal set in K reference signal sets from a network device; and
receiving, by the terminal device, the i<sup>th</sup> reference signal set from the network device based on the configuration information, wherein the i<sup>th</sup> reference signal set is associated with an i<sup>th</sup> PO in a PF, the PF comprises K POs, and the terminal device corresponds to the i<sup>th</sup> PO; and in time domain, the i<sup>th</sup> reference signal set is after a synchronization signal burst set and before the i<sup>th</sup> PO, wherein both K and i are positive integers, and i ≤ K.

18. The method according to claim 17, wherein if i = 1, the i<sup>th</sup> reference signal set is after the synchronization signal burst set and before a first PO in the PF, and if 2 ≤ i ≤ K, the i<sup>th</sup> reference signal set is after an (i-1)<sup>th</sup> PO and before the i<sup>th</sup> PO.

19. The method according to claim 17 or 18, wherein the i<sup>th</sup> reference signal set comprises M reference signals, the M reference signals are sent in a beam-sweeping form, and each reference signal corresponds to one beam direction, wherein M is a positive integer.

20. The method according to claim 19, wherein if a quantity M of beams corresponding to the i<sup>th</sup> reference signal set is equal to a quantity N of beams corresponding to the synchronization signal burst set, a k<sup>th</sup> reference signal in the i<sup>th</sup> reference signal set corresponds to a k<sup>th</sup> physical downlink control channel PDCCH monitoring occasion in the i<sup>th</sup> PO, wherein both N and k are positive integers, and k ≤ M;

if a quantity M of beams corresponding to the i<sup>th</sup> reference signal set is less than a quantity N of beams corresponding to the synchronization signal burst set, and N is an integer multiple of M, a k<sup>th</sup> reference signal in the i<sup>th</sup> reference signal set corresponds to [(k - 1)*N/M + 1]<sup>th</sup> to (k*N/M)<sup>th</sup> PDCCH monitoring occasions in the i<sup>th</sup> PO, wherein both N and k are positive integers, and k ≤ M;
if a quantity M of beams corresponding to the i<sup>th</sup> reference signal set is less than a quantity N of beams corresponding to the synchronization signal burst set, and N is not an integer multiple of M, assuming that $x = N - M \left\lfloor \frac{N}{M} \right\rfloor$, an m<sup>th</sup> reference signal in first x reference signals in the i<sup>th</sup> reference signal set corresponds to [(m-1)(⌊N/M⌋ + 1) + 1]<sup>th</sup> to [m(⌊N/M⌋ + 1)]<sup>th</sup> PDCCH monitoring occasions in the i<sup>th</sup> PO, and a j<sup>th</sup> reference signal in last M - x reference signals in the i<sup>th</sup> reference signal set corresponds to [x(⌊N/M⌋ + 1) + (j - 1)⌊N/M⌋ + 1]<sup>th</sup> to [x(⌊N/M⌋ + 1) + j⌊N/M⌋]<sup>th</sup> PDCCH monitoring occasions in the i<sup>th</sup> PO, wherein N, x, m, and j are all positive integers, m ≤ x, and j ≤ M - x; or

if a quantity M of beams corresponding to the i^th reference signal set is less than a quantity N of beams corresponding to the synchronization signal burst set, the configuration information indicates at least one PDCCH monitoring occasion in the i^th PO corresponding to each of the M reference signals.

21. An apparatus for sending a reference signal set, comprising:

a processing unit invoking a transceiver unit to send configuration information for a reference signal set; and
the processing unit further invoking the transceiver unit to send the reference signal set based on the configuration information, wherein the reference signal set is associated with a PF, and in time domain, the reference signal set is after a synchronization signal burst set and before a first PO in the PF.

22. The apparatus according to claim 21, wherein the reference signal set comprises M reference signals, the M reference signals are sent in a beam-sweeping form, and each reference signal corresponds to one beam direction, wherein M is a positive integer.

23. The apparatus according to claim 22, wherein the M reference signals are M SSSs, M CSI-RSs, or M new sequence-based reference signals.

24. The apparatus according to claim 22 or 23, wherein the M reference signals are distributed on M consecutive symbols; or the M reference signals are distributed on M nonconsecutive symbols, and the configuration information indicates a sending pattern of the M reference signals.

25. The apparatus according to any one of claims 22 to 24, wherein if a quantity M of beams corresponding to the reference signal set is equal to a quantity N of beams corresponding to the synchronization signal burst set, a $k^{th}$ reference signal in the reference signal set corresponds to a $k^{th}$ PDCCH monitoring occasion in each PO in the PF, wherein both N and k are positive integers, and $k \leq M$;

if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, wherein both N and k are positive integers, and $k \leq M$;
if a quantity M of beams corresponding to the reference signal set is less than a quantity N of beams corresponding to the synchronization signal burst set, and N is not an integer multiple of M, assuming that $x = N - M\left\lfloor\frac{N}{M}\right\rfloor$ an i^th reference signal in the first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{th}$ reference signal in the last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j\lfloor N/M \rfloor]^{th}$ PDCCH monitoring occasions in each PO in the PF, wherein N, x, i, and j are all positive integers, $i \leq x$, and $j \leq M - x$; or
if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

26. The apparatus according to any one of claims 21 to 25, wherein the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of the first PDCCH monitoring occasion in the first PO or a starting symbol of a slot in which the first PDCCH monitoring occasion in the first PO is located.

27. An apparatus for receiving a reference signal set, comprising:

a processing unit invoking a transceiver unit to receive configuration information for a reference signal set from a network device; and
the processing unit further invoking the transceiver unit to receive the reference signal set from the network device based on the configuration information, wherein the reference signal set is associated with a paging frame PF, and in time domain, the reference signal set is after a synchronization signal burst set and before a first paging occasion PO in the PF.

28. The apparatus according to claim 27, wherein the reference signal set comprises M reference signals, the M reference signals are sent in a beam-sweeping form, and each reference signal corresponds to one beam direction, wherein M is a positive integer.

**29.** The apparatus according to claim 28, wherein the M reference signals are M secondary synchronization signals SSSs, M channel state information reference signals CSI-RSs, or M new sequence-based reference signals.

**30.** The apparatus according to claim 28 or 29, wherein the M reference signals are distributed on M consecutive symbols; or the M reference signals are distributed on M nonconsecutive symbols, and the configuration information indicates a sending pattern of the M reference signals.

**31.** The apparatus according to any one of claims 28 to 30, wherein if a quantity M of beams corresponding to the reference signal set is equal to a quantity N of beams corresponding to the synchronization signal burst set, a $k^{th}$ reference signal in the reference signal set corresponds to a $k^{th}$ physical downlink control channel PDCCH monitoring occasion in each PO in the PF, wherein both N and k are positive integers, and $k \le M$;

if a quantity M of beams corresponding to the reference signal set is less than a quantity N of beams corresponding to the synchronization signal burst set, and N is an integer multiple of M, a $k^{th}$ reference signal in the reference signal set corresponds to $[(k - 1)*N/M + 1]^{th}$ to $(k*N/M)^{th}$ PDCCH monitoring occasions in each PO in the PF, wherein both N and k are positive integers, and $k \le M$;

if a quantity M of beams corresponding to the reference signal set is less than a quantity N of beams corresponding to the synchronization signal burst set, and N is not an integer multiple of M, assuming that $x = N - M \left\lfloor \frac{N}{M} \right\rfloor$, an $i^{th}$ reference signal in the first x reference signals in the reference signal set corresponds to $[(i - 1)(\lfloor N/M \rfloor + 1) + 1]^{th}$ to $[i(\lfloor N/M \rfloor + 1)]^{th}$ PDCCH monitoring occasions in each PO in the PF, and a $j^{th}$ reference signal in the last M - x reference signals in the reference signal set corresponds to $[x(\lfloor N/M \rfloor + 1) + (j - 1)\lfloor N/M \rfloor + 1]^{th}$ to $[x(\lfloor N/M \rfloor + 1) + j \lfloor N/M \rfloor]^{th}$ PDCCH monitoring occasions in each PO in the PF, wherein N, x, i, and j are all positive integers, $i \le x$, and $j \le M - x$; or

if a quantity M of beams corresponding to the reference signal set is less than a quantity N of beams corresponding to the synchronization signal burst set, the configuration information indicates at least one PDCCH monitoring occasion, in each PO in the PF, corresponding to each of the M reference signals.

**32.** The apparatus according to any one of claims 27 to 31, wherein the configuration information indicates a periodicity and an offset of the reference signal set; or the configuration information indicates an offset value between the reference signal set and the first PO of the PF, the offset value starts at either a starting symbol of the reference signal set or an ending symbol of the reference signal set, and the offset value ends at either a starting symbol of the first PDCCH monitoring occasion in the first PO or a starting symbol of a slot in which the first PDCCH monitoring occasion in the first PO is located.

**33.** An apparatus for sending a reference signal set, comprising:

a processing unit invoking a transceiver unit to send configuration information for an $i^{th}$ reference signal set in K reference signal sets; and the processing unit further invoking the transceiver unit to send the $i^{th}$ reference signal set based on the configuration information, wherein the $i^{th}$ reference signal set is associated with an $i^{th}$ PO in a PF, the PF comprises K POs, and in time domain, the $i^{th}$ reference signal set is after a synchronization signal burst set and before the $i^{th}$ PO, wherein both K and i are positive integers, and $i \le K$.

**34.** The apparatus according to claim 31, wherein if i = 1, the $i^{th}$ reference signal set is after the synchronization signal burst set and before a first PO in the PF, and if $2 \le i \le K$, the $i^{th}$ reference signal set is after an $(i-1)^{th}$ PO and before the $i^{th}$ PO.

**35.** The apparatus according to claim 33 or 34, wherein the $i^{th}$ reference signal set comprises M reference signals, the M reference signals are sent in a beam-sweeping form, and each reference signal corresponds to one beam direction, wherein M is a positive integer.

**36.** The apparatus according to claim 35, wherein if a quantity M of beams corresponding to the $i^{th}$ reference signal set is equal to a quantity N of beams corresponding to the synchronization signal burst set, a $k^{th}$ reference signal in the $i^{th}$ reference signal set corresponds to a $k^{th}$ physical downlink control channel PDCCH monitoring occasion in the $i^{th}$ PO, wherein both N and k are positive integers, and $k \le M$;

if a quantity M of beams corresponding to the $i^{th}$ reference signal set is less than a quantity N of beams corresponding to the synchronization signal burst set, and N is an integer multiple of M, a $k^{th}$ reference signal in the $i^{th}$ reference signal set corresponds to $[(k - 1)*N/M + 1]^{th}$ to $(k*N/M)^{th}$ PDCCH monitoring occasions in the $i^{th}$ PO, wherein both N and k are positive inte-

gers, and $k \leq M$;

if a quantity M of beams corresponding to the $i^{th}$ reference signal set is less than a quantity N of beams corresponding to the synchronization signal burst set, and N is not an integer multiple of M, assuming that $x = N - M\left\lfloor\frac{N}{M}\right\rfloor$, an $m^{th}$ reference signal in first x reference signals in the $i^{th}$ reference signal set corresponds to [(m-1)($\lfloor N/M\rfloor$ + 1) + 1]$^{th}$ to [m($\lfloor N/M\rfloor$ + 1)]$^{th}$ PDCCH monitoring occasions in the $i^{th}$ PO, and a $j^{th}$ reference signal in last M - x reference signals in the $i^{th}$ reference signal set corresponds to [x($\lfloor N/M\rfloor$ + 1) + (j - 1)$\lfloor N/M\rfloor$ + 1]$^{th}$ to [x($\lfloor N/M\rfloor$ + 1) + j$\lfloor N/M\rfloor$]$^{th}$ PDCCH monitoring occasions in the $i^{th}$ PO, wherein N, x, m, and j are all positive integers, $m \leq x$, and $j \leq M - x$; or

if a quantity M of beams corresponding to the $i^{th}$ reference signal set is less than a quantity N of beams corresponding to the synchronization signal burst set, the configuration information indicates at least one PDCCH monitoring occasion in the $i^{th}$ PO corresponding to each of the M reference signals.

37. An apparatus for receiving a reference signal set, comprising:

a processing unit invoking a transceiver unit to receive configuration information for an $i^{th}$ reference signal set in K reference signal sets from a network device; and

the processing unit further invoking the transceiver unit to receive the $i^{th}$ reference signal set from the network device based on the configuration information, wherein the $i^{th}$ reference signal set in the K reference signal sets is associated with an $i^{th}$ PO in a PF, the PF comprises K POs, and the terminal device corresponds to the $i^{th}$ PO; and in time domain, the $i^{th}$ reference signal set is after a synchronization signal burst set and before the $i^{th}$ PO, wherein both K and i are positive integers, and $i \leq K$.

38. The apparatus according to claim 37, wherein if i = 1, the $i^{th}$ reference signal set is after the synchronization signal burst set and before a first PO in the PF, and if $2 \leq i \leq K$, the $i^{th}$ reference signal set is after an (i-1)$^{th}$ PO and before the $i^{th}$ PO.

39. The apparatus according to claim 37 or 38, wherein the $i^{th}$ reference signal set comprises M reference signals, the M reference signals are sent in a beam-sweeping form, and each reference signal corresponds to one beam direction, wherein M is a positive integer.

40. The apparatus according to claim 39, wherein if a quantity M of beams corresponding to the $i^{th}$ reference signal set is equal to a quantity N of beams corresponding to the synchronization signal burst set, a $k^{th}$ reference signal in the $i^{th}$ reference signal set corresponds to a $k^{th}$ physical downlink control channel PDCCH monitoring occasion in the $i^{th}$ PO, wherein both N and k are positive integers, and $k \leq M$;

if a quantity M of beams corresponding to the $i^{th}$ reference signal set is less than a quantity N of beams corresponding to the synchronization signal burst set, and N is an integer multiple of M, a $k^{th}$ reference signal in the $i^{th}$ reference signal set corresponds to [(k - 1)*N/M + 1]$^{th}$ to (k*N/M)$^{th}$ PDCCH monitoring occasions in the $i^{th}$ PO, wherein both N and k are positive integers, and $k \leq M$;

if a quantity M of beams corresponding to the $i^{th}$ reference signal set is less than a quantity N of beams corresponding to the synchronization signal burst set, and N is not an integer multiple of M, assuming that $x = N - M\left\lfloor\frac{N}{M}\right\rfloor$, an $m^{th}$ reference signal in first x reference signals in the $i^{th}$ reference signal set corresponds to [(m-1)($\lfloor N/M\rfloor$ + 1) + 1]$^{th}$ to [m($\lfloor N/M\rfloor$ + 1)]$^{th}$ PDCCH monitoring occasions in the $i^{th}$ PO, and a $j^{th}$ reference signal in last M - x reference signals in the $i^{th}$ reference signal set corresponds to [x($\lfloor N/M\rfloor$ + 1) + (j - 1)$\lfloor N/M\rfloor$ + 1]$^{th}$ to [x($\lfloor N/M\rfloor$ + 1) + j$\lfloor N/M\rfloor$]$^{th}$ PDCCH monitoring occasions in the $i^{th}$ PO, wherein N, x, m, and j are all positive integers, $m \leq x$, and $j \leq M - x$; or

if a quantity M of beams corresponding to the $i^{th}$ reference signal set is less than a quantity N of beams corresponding to the synchronization signal burst set, the configuration information indicates at least one PDCCH monitoring occasion in the $i^{th}$ PO corresponding to each of the M reference signals.

41. A computer storage medium, wherein the computer storage medium stores computer-executable instructions, and when invoked by a computer, the computer-executable instructions are used to cause the computer to perform the method according to any one of claims 1 to 20.

SMTC window

UE 1

PO 1    PO 2

PF

PO 3    PO 4

PF

20 ms

Time
Time

The UE 1 performs
AGC tuning, beam
selection, and RRM
measurement within an
SMTC window based
on an SSB

FIG. 1

Wake up duration between SSB and PO
Wake-up duration between an SSB in a
synchronization signal burst set and a PO for UE

SSB

CSI-RS

PO

Wake up duration between CSI-RS and PO
Wake-up duration between a CSI-RS and a PO for UE

FIG. 2

FIG. 3

Network device

Terminal device

Step 400: The network device
sends configuration information
for a reference signal set

Step 410: The network device sends
the reference signal set based on the
configuration information

FIG. 4

FIG. 5(a)

FIG. 5(b)

FIG. 5(c)

FIG. 6

FIG. 7

SMTC
window

Reference
signal set
↓

PO       PO                              PO       PO

PF            PF              PF            PF

Time (time)

20 ms

FIG. 8

Network device

Terminal device

Step 900: The network device sends configuration information for an $i^{th}$ reference signal set in K reference signal sets

Step 910: The network device sends the $i^{th}$ reference signal set based on the configuration information

FIG. 9

FIG. 10

FIG. 11

1200

Apparatus

1201

Communications interface

1202

Processor

1203

Memory

FIG. 12

## INTERNATIONAL SEARCH REPORT

International application No.

**PCT/CN2020/087063**

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 参考信号, 寻呼帧, 配置, 关联, 寻呼时刻, 同步信号丛集, reference, paging frame, configuration, association, paging occasion, SS burst set

**C.    DOCUMENTS CONSIDERED TO BE RELEVANT**

| Category* | Citation of document, with indication, where appropriate, of the relevant passages | Relevant to claim No. |
|---|---|---|
| A | CN 108989008 A (HUAWEI TECHNOLOGIES CO., LTD.) 11 December 2018 (2018-12-11) description, paragraphs [0006]-[0055] | 1-41 |
| A | CN 109246814 A (GIONEE COMMUNICATION EQUIPMENT CO., LTD.) 18 January 2019 (2019-01-18) entire document | 1-41 |
| A | CN 109644426 A (GUANGDONG OPPO MOBILE TELECOMMUNICATIONS CORP., LTD.) 16 April 2019 (2019-04-16) entire document | 1-41 |
| A | WO 2018175840 A1 (CONVIDA WIRELESS, LLC) 27 September 2018 (2018-09-27) entire document | 1-41 |
| A | ERICSSON. "Additional reference configurations for 34.108" *TSG-RAN Working Group 2, Meeting #30 R2-021687*, 27 June 2002 (2002-06-27), entire document | 1-41 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **13 July 2020** | **29 July 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/087063**

| Patent document cited in search report | | | Publication date (day/month/year) | Patent family member(s) | | | Publication date (day/month/year) |
|---|---|---|---|---|---|---|---|
| CN | 108989008 | A | 11 December 2018 | WO | 2018223891 | A1 | 13 December 2018 |
| CN | 109246814 | A | 18 January 2019 | None | | | |
| CN | 109644426 | A | 16 April 2019 | WO | 2020061958 | A1 | 02 April 2020 |
| WO | 2018175840 | A1 | 27 September 2018 | EP | 3602826 | A1 | 05 February 2020 |
| | | | | EP | 3602828 | A1 | 05 February 2020 |
| | | | | WO | 2018175714 | A1 | 27 September 2018 |
| | | | | US | 2020112993 | A1 | 09 April 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910365298